# EUROPEAN PATENT APPLICATION

(11) **EP 0 951 003 A1**
(43) Date of publication of application: **20.10.1999**
(21) Application number: 97939163.8
(22) Date of filing: 04.09.1997
(51) Int. Cl.: G09B 19/24, G09B 23/28

(54) **INJECTION TRAINING TOOL**

(30) Priority: 29.11.1996 JP 31981696
(71) Applicant: Eli Lilly Japan K.K., Hyogo 651-0086 (JP)
(72) Inventor: ITOH, Taigen-West Hill Kobe F-502, Kobe-shi,Hyogo 651-21 (JP)
(74) Representative: Hudson, Christopher Mark
(86) International application number: JP9703096
(87) International publication number: WO9824082

(57) **Abstract**

The present invention is intended to provide an injection practice apparatus which enables a person to practice a series of procedures to handle an injector in a situation much closer to its real situation. The injection practice apparatus (1) includes a casing (10) in a curved shape an upper wall of which is provided with an opening (16), where a sponge member (30) is housed inside the casing (10). The injection practice apparatus (1) is placed on the femur (8) of the person. The person pinches up the sponge member (30) exposed through the opening (16) and pricks a needle (4) of an injection syringe to a protrusion (33) of the sponge member (30) formed by such a pinching to dispense injection liquid. The injection practice apparatus is especially preferable for practising giving an injection to its user himself/herself.

## Description

### TECHNICAL FIELD

The present invention relates to an injection practice device, and particularly relates to the injection practice device being preferably used for self-injection practice under which a patient gives an injection to himself/herself.

### BACKGROUND ART

Generally, a doctor or a nurse gives an injection to a patient. However, there is a case in which a patient, or a person who takes care of the patient, gives an injection to the patient himself/herself, under such a situation as it is necessary to repeat injections of insulin or growth hormone, for example, at predetermined intervals. In such a case as the patient, or the person who takes care of the patient, who is not an expert of medical treatment, gives the injection to the patient himself/herself, it is a common practice that the patient, or the person who takes care of the patient, exercises himself/herself in handling an injector before a real injection. More specifically, he/she exercises himself/herself only in handling the injector, without letting a needle of the injector prick it, and he/she practices injecting by making the needle thereof pierce through a suitable object such as a fruit or sponge, etc. if necessary.

However, such a practice employing a partial step taken out of total steps to handle the injector, does not allow himself/herself to sufficiently master his/her posture he/she should take when he/she actually gives the injection, or does not allow himself/herself to sufficiently master a feeling of resistance of the injection needle pricking it. Accordingly, the conventional practice soothes his/her uneasiness or tension only to some extent, in case that he/she actually gives the injection to a part to be pricked through thereby for the first time.

### DISCLOSURE OF THE INVENTION

A technical object of the present invention is to provide an injection practice device which enables a user to practice a series of procedures of handling an injector under a condition much closer to its real one.

In order to achieve the technical object, the injection practice device according to the present invention has an essential characterization that it comprises: a base member having a hardness which does not allow a needle of an injector to pierce through the base member, and an elastic member having a hardness which imitates a hardness of a part to which an injection is given, wherein the elastic member is positioned on the base member so that the elastic member can be pinched upward. And, the present invention can be embodied in the following various forms.

The injection practice device comprises: a casing which has a top wall and a bottom wall facing the top wall, with the top wall and the bottom wall being generally parallel to each other; and an elastic member which is housed between the top wall and the bottom wall of the casing, wherein the top wall of the casing is provided with an opening window through which the elastic member is exposed outside, wherein the bottom wall of the casing has a curved shape which is generally fit for a part to which an injection is given, the bottom wall thereof having a hardness which does not allow an injection needle to pierce through the bottom wall, and wherein the elastic member has a hardness which imitates a hardness of the part to which the injection is given, the elastic member having a flexibility which allows itself to be pinched up through the opening window of the top wall of the casing.

In the aforementioned structure, in order to practice giving an injection, the casing is used as follows. That is, firstly, the casing is mounted on a part of a user himself/herself, or on a part of another person, to which the injection is given. Since the bottom wall of the casing is curved to fit to the part to which the injection is given, the casing sits stably thereon. Next, the elastic member being exposed outside through the opening window of the casing is pinched upwards, the injection needle is pierced through the pinched area of the elastic member, and then the liquid therein is injected into the elastic member. Since the injection practice device is positioned close to the injection part to which the injection is given, it is possible to practice a series of injector handling operations with a posture similar to a posture with which a real injection is given to the injection part. The elastic member gives a feel approximate to that of the injection part to which the real injection is given.

Accordingly, the user can practice a series of injecting operations in a situation very close to the real one.

In the above arrangement, it is desirable that the elastic member resembles the real injection part as closely as possible, for the purpose of letting the user feel more reality thereof.

Preferably, the elastic member is arranged along the curved shape of the bottom wall of the casing, wherein the elastic member has a pair of ends in a curving direction in which the bottom wall is curved, a deformation restraint member being attached to each of the pair of ends of the elastic member, and the deformation restraint member being slidable in a space between the top wall and the bottom wall of the casing.

In the above arrangement, when the elastic member is pinched upwards, the deformation restraint member slides within the casing in the curving direction, and the elastic member is lifted up in deformation as if the elastic member is largely undulating in the curving direction. However, the deformation of the elastic member is restricted to some extent by the deformation restraint member, in a direction in which the deformation restraint member extends, or in the direction which is perpendicular to the curving direction. Therefore, fewer wrinkles are formed in the direction in which the deformation restraint member extends. Thus, the elastic member can be pinched upward in a situation close to the real situation in which the injection part, such as a femoral part for example, is pinched up. Also, it is possible that the deformation restraint member prevents the elastic member from sneaking away from the opening window of the casing.

Preferably, the deformation restraint member attached to the elastic member is positioned outside the opening window of the top wall of the casing with respect to the curving direction, wherein the deformation restraint member is moved up to an inside of the opening window of the top wall of the casing when the elastic member is pinched upwards more than a predetermined level through the opening window of the top wall of the casing.

According to the aforementioned arrangement, the deformation restraint member starts being visible through the opening window of the casing when the elastic member is pinched upwards more than the predetermined level. This enables the user to easily learn its appropriate pinching level.

Preferably, there is further provided a backing member that is arranged, with respect to the opening window of the top wall of the casing, between the elastic member and the bottom wall of the casing, wherein the backing member has a hardness which imitates a hardness of human muscle layer.

According to the arrangement, when the injection needle is pierced more deeply through the elastic member, the injection needle is stabbed or pierced into the backing member. As a result, the user can have a pseudo-experience (or false experience) about an actual feel of the injection needle reaching the muscle layer of human body in case that the injection needle is pierced too deeply therethrough.

Preferably, the elastic member comprises: an elastic layer with an elasticity and a thickness which imitate an elasticity and a thickness, respectively, of human subcutaneous layer; and a skin film layer which is bonded to the elastic layer and which has an elasticity and a thickness which imitate an elasticity and a thickness, respectively, of human outer skin, wherein the skin film layer is exposed outside through the opening window of the top wall of the casing.

According to the arrangement, the skin film layer of the elastic member reproduces a feel of a larger resistance, of the injection needle against the outer skin of the injection part, being exerted just before the injection needle is pierced therethrough, and the skin film layer also reproduces such a feel as the resistance thereof is reduced quickly at the instance the injection needle is pierced therethrough; meanwhile, the elastic layer of the elastic member reproduces a feel of a smaller resistance of the injection needle being exerted when the injection needle proceeds inside the subcutaneous tissue layer once after the injection needle is pierced through the injection part. As a result, these layers gives the user more realistic feeling of the injection.

### BRIEF DESCRIPTION OF DRAWINGS

Fig. 1 is a general perspective view of an injection practice device of the present invention, showing a condition in which a casing thereof is closed;
Fig. 2 is a general perspective view of the injection practice device of Fig. 1, showing a condition in which the casing is opened;
Fig. 3 is an exploded perspective view of the injection practice device of Fig. 1;
Fig. 4 is an exploded perspective view showing a main part of a sponge member of Fig. 2; and
Fig. 5 is a perspective view showing how to use the injection practice device of Fig. 1.

### BEST MODE FOR CARRYING OUT THE INVENTION

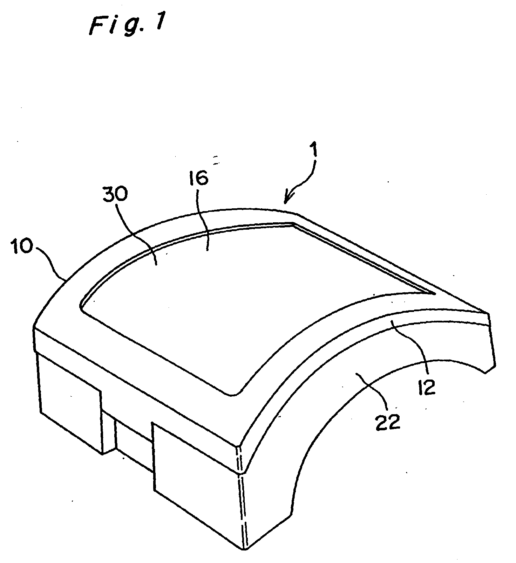

A detailed description is made below upon an injection practice device, shown in Figs. 1 to 5, according to an embodiment of the present invention.

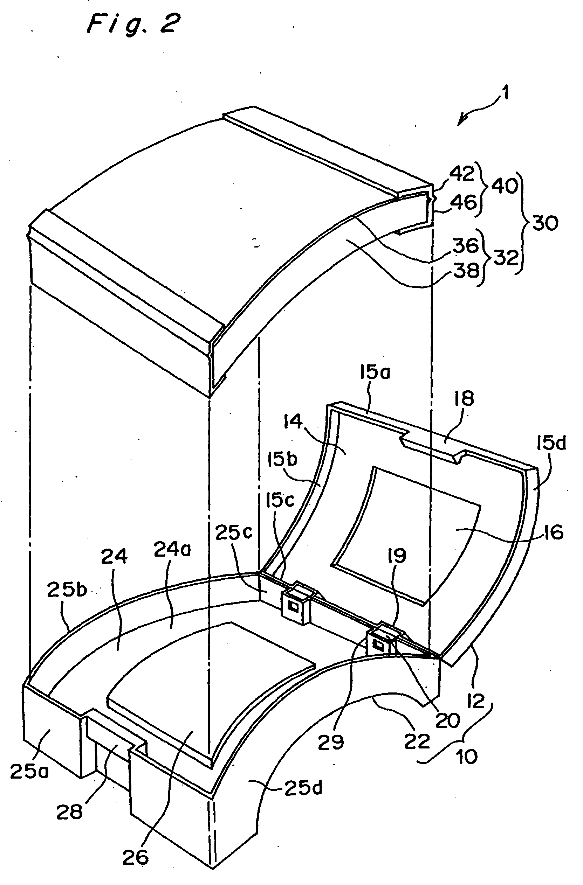

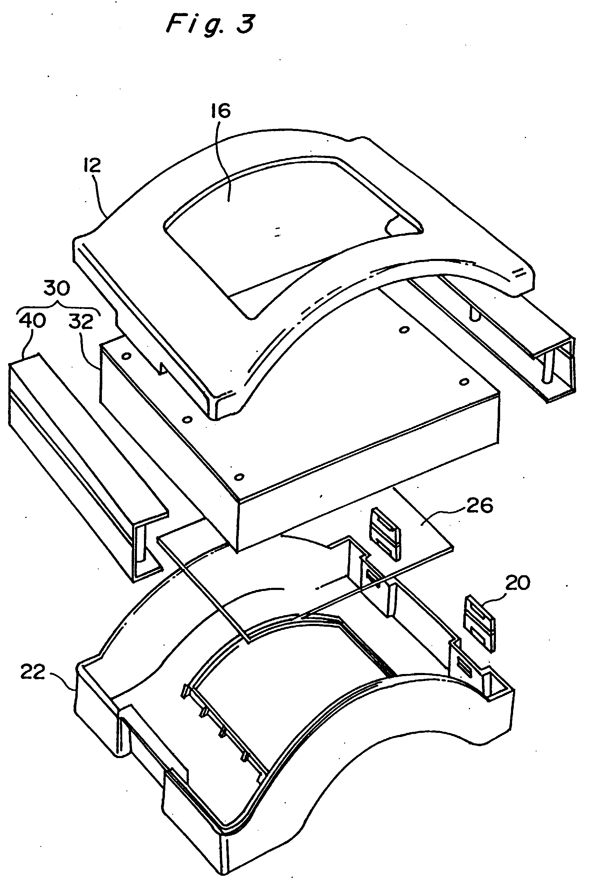

As shown in a general perspective view of Fig. 1, a general perspective view of Fig. 2, and an exploded perspective view in Fig. 3, the injection practice device 1 of the present invention, generally, has a casing 10, and a sponge member 30 that is housed inside the casing 10, in which the sponge member 30 is exposed outside through an opening window 16 of the casing 10. The injection practice device 1 is mounted on a part of human body to which an injection is given, and a user practices giving an injection to the sponge member 30 instead of actually giving the injection to the part of human body.

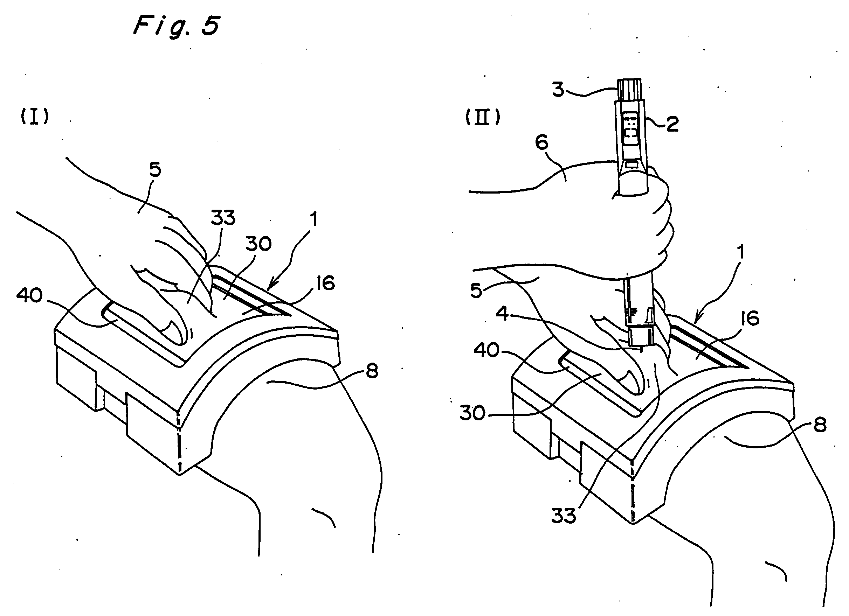

The casing 10 has a generally C-shaped curving configuration in cross section, with which configuration the casing 10 is easy to be mounted on a femoral part or femur 8, for instance, as shown in Fig. 5. As shown in Fig. 2, the casing 10 has an upper casing 12 and a lower casing 22 which are divided up and down along the curve thereof, and the casing 10 has a hinge 20. The casings 12, 22 have hinge mounting parts 19, 29 at one end in a direction of the curve, and have engagement parts 18, 28 at the other end in the direction thereof, respectively. The hinge 20 is mounted on the hinge attachment parts 19, 29, by which the upper casing 12 and the lower casing 22 are connected to each other so as to be free to open and close relative to each other. In the arrangement, the upper casing 12 and the lower casing 22 are kept closing, as shown in Fig. 1, when the engagement parts 18, 28 are engaged with each other.

More specifically, as shown in Fig. 2, the upper casing 12 is a box-shaped body that comprises a rectangular top wall 14 having a generally C-shaped curving configuration in cross section, and comprises peripheral walls 15a, 15b, 15c and 15d each of which is erected on each side of the top wall 14 inside the curve. The rectangular opening 16 is provided in the top wall 14, through which opening the sponge member 30, housed in the casing 10, is exposed outside. The lower casing 22 is a box-shaped body that comprises a rectangular bottom wall 24 having a generally C-shaped curving configuration in cross section, and comprises peripheral walls 15a, 15b, 15c and 15d each of which is erected on each side of the bottom wall 14 outside the curve. A top surface 24a of the bottom wall 24 is attached with a rectangular backing sheet 26 which is placed facing the opening window 16 in the upper casing 12 via the sponge member 30. The backing sheet 26 is made of a material, such as a PVC sheet for instance, having hardness similar to that of the human muscle layer. Meanwhile, the upper and lower casings 12, 22 are made of a material, such as an ABS resin for instance, having hardness which does not allow a needle of an injection syringe pierce therethrough.

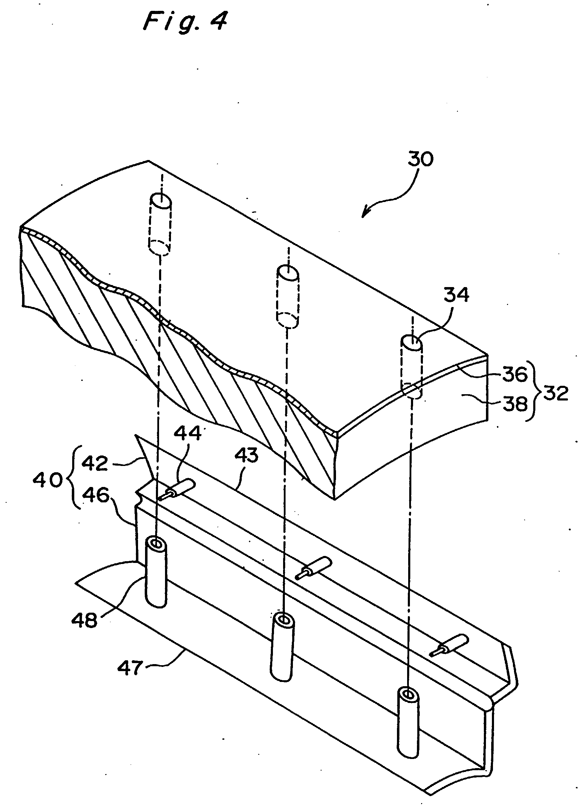

As shown in exploded perspective views of Figs. 2 and 3, and in a fragmental exploded perspective view of Fig. 4, the sponge member 30 comprises a rectangular sponge 32, and a pair of guiding frames 40 which are fixed to a pair of opposite sides of the sponge 32.

The sponge 32 comprises a sponge body 38 made of relatively thick urethane foam, and comprises a relatively thin film 36 of acrylic family which is bonded thereto by a solvent, where the film 36 is exposed outside through the opening 16 of the casing 10. The film 36, tinted with a skin color for example, simulates an outer skin layer of the human body so as to reproduce a resistance of skin a person feels when the needle of the injection syringe is thrust into it. The sponge body 38 simulates a subcutaneous layer of the human body, and the sponge body 38 has a thickness of about 23 mm for example, in view of a subcutaneous fat therein. With the arrangement, the needle can be thrust into it with little resistance. One example of physical properties of the urethane foam used for the sponge body 38 is: density of 26 ± 2 kg/m³, hardness of 11 ± 2 kgf, extensibility of 150%, pull strength of 0.7 or larger, and compressive residual strain of 6.0%. Apertures 34 are provided on both ends of the sponge 32, and the guiding frames 40, which are described below, are connected to the apertures 34.

The guiding frame 40 is a resin structure with a generally W-shaped cross section, comprising an upper part 42 which has a generally L-shaped cross section, and comprising a lower part 46 which has a generally L-shaped cross section that is connected to the upper part 42 to form the generally W-shaped cross section. Appropriate number of engagement bars 44 are erected on a surface of a top wall 43 of the upper part 42 of the guiding frame 40, and the number of engagement bars 48 are erected on a surface, opposing the surface of the top wall 43, of a lower wall 47 of the lower part 46 thereof. Each of the guiding frames 40 is attached to each of the two ends of the sponge 32, by inserting the engagement bars 44, 48 through the apertures 34 in the sponge 32, by closing the upper part 42 and the lower part 46 together so that these parts 42, 46 form generally U-shaped in cross section, and by engaging tips of the engagement bars 44, 48 together.

The sponge member 30 is housed inside the casing 10 so that the guiding frames 40 thus attached are arranged on both ends of the casing 10 in a direction of the curve of the casing 10. The top wall 43, and the bottom wall 47 facing the top wall 43, of each guiding frame 40, are bent, so that the sponge member 30 is easily housed along the curve of the casing 10, so that the sponge member 30 smoothly moves within the casing 10 when the sponge member 30 is pinched upwards through the opening window 16 of the casing 10. The guiding frames 40 also prevent the sponge member 30 from being freely deformed by the pinching force and from coming out of the opening window 16 of the casing 10. The sponge member 30 can be replaced by opening the casing 10, as shown in Fig. 2.

The injection practice device 1 being structured as described above, may be used by the user for the purpose of practicing giving an injection to his/her own femoral part 8 with a pen-type injection syringe (or injector) 2, for instance, as shown in Fig. 5.

Namely, as shown in Fig. 5 (I), the user puts the injection practice device 1 on his femoral part 8, and then pinches up, by his left hand 5, the sponge member 30 being exposed outside through the opening window 16 of the casing 10. When the sponge member 30 is pinched upwards to a certain level, the guiding frames 40 start being visible through the opening window 16 of the casing 10; thus, the user can know a suitably pinching amount thereof needed for giving the injection.

Since the lower casing 22 of the casing 10 of the injection practice device 1 is curved, it sits stably on the femoral part 8 of the user. The injection practice device 1 is, at the same time, fixed against the femoral part 8 when the user pinches the sponge member 30 upward by the left hand 5. Accordingly, there arises no inconvenience even if the injection practice device 1 is fixed thereon without any particular fixing member. Alternatively, the injection practice device 1 may be fixed thereon with a band or the like.

Next, as shown in Fig. 5 (II), the user holds the injector 2 in his right hand 6, and thrusts the needle 4 into a protrusion portion 33, formed by pinching it by the left hand, of the sponge member 30 so that the needle 4 is directed perpendicularly to the femoral part 8, namely to the injection practice device 1. Then, the user lets go his left hand 5 from the sponge member 30, and pushes a button 3 of the injector 2 to dispense a required amount of injection liquid to the sponge member 30.

The injection practice device 1 is placed close to the femoral part 8 where a real injection should be given. Therefore, the user can handle the injector 2, keeping almost the same posture he takes at time of real injection. The sponge member 30 is structured so as to imitate the outer skin layer and the subcutaneous tissue layer of the human body. Therefore, the sponge member 30 reproduces a situation very close to the real one under which a real injection is given, in respect of a feel of the femoral part 8 being pinched upwards, of a feel of resistance of the needle 4 pricking against the skin, and of a feel of the needle 4 being lightly pushed under the skin with a rapid decrease of resistance once after the needle 4 is pierced through the skin, etc.

In addition, if the needle 4 is thrust too deeply into the injection practice device 1, the needle 4 stabs into the harder backing sheet 26. At this time, the user can have a pseudo-experience (or a false experience) about a feel which results from such an inappropriate handling of the injector as the needle is thrust too deeply beyond the subcutaneous tissue layer and reaches up to the muscle layer. By the way, the lower casing 22 is hard enough not to let the needle 4 pierce through it and not to let the needle 4 reach the femoral part 8.

As described above, the injection practice device 1 is arranged close to the part of the body to which the real injection is given. Therefore, the user can practice a series of procedures of giving an injection under a condition closer to a condition in which a real injection is given.

The present invention is not limited to the aforementioned embodiment, and may be implemented in any other specific forms. For example, the injection practice device may be used for the arm, the hip, the abdomen, etc., in which case the bottom wall 22 of the casing 10 is constructed so as to fit to the shape of such body areas it is placed on, and in which case a band, or the like, may be properly used for fixing the casing thereto. The injection practice device 1 may be used not only for practicing giving the injection to himself/herself, but also for practicing giving the injection to a patient under such a situation as a person who takes care of the patient puts the injection practice device 1 onto the patient's hip or other parts, for example. Furthermore, it is also possible to practice injecting by mounting the injection practice device 1 onto an anatomical model.

## Claims

1. An injection practice device, characterized in that there are provided:
a casing (10) which has a top wall (14) and a bottom wall (24) facing the top wall (14), with the top wall (14) and the bottom wall (24) being generally parallel to each other; and
an elastic member (32) which is housed between the top wall (14) and the bottom wall (24) of the casing (10),
that the top wall (14) of the casing (10) is provided with an opening window (16) through which the elastic member (32) is exposed outside,
that the bottom wall (24) of the casing (10) has a curved shape which is generally fit for a part (8) to which an injection is given, the bottom wall (24) thereof having a hardness which does not allow an injection needle (4) to pierce through the bottom wall (24), and
that the elastic member (32) has a hardness which imitates a hardness of the part (8) to which the injection is given, the elastic member (32) having a flexibility which allows itself to be pinched up through the opening window (16) of the top wall (14) of the casing (10).

2. The injection practice device as claimed in claim 1, wherein the elastic member (32) is arranged along the curved shape of the bottom wall (24) of the casing (10), and
wherein the elastic member (32) has a pair of ends in a curving direction in which the bottom wall (24) is curved, a deformation restraint member (40) being attached to each of the pair of ends of the elastic member (32), and the deformation restraint member (40) being slidable in a space between the top wall (14) and the bottom wall (24) of the casing (10).

3. The injection practice device as claimed in claim 2, wherein the deformation restraint member (40) attached to the elastic member (32) is positioned outside the opening window (16) of the top wall (14) of the casing (10) with respect to the curving direction, and
wherein the deformation restraint member (40) is moved up to an inside of the opening window (16) of the top wall (14) of the casing (10) when the elastic member (32) is pinched upwards more than a predetermined level through the opening window (16) of the top wall (14) of the casing (10).

4. The injection practice device as claimed in claim 1 or 2, which further comprises a backing member (26) that is arranged, with respect to the opening window (16) of the top wall (14) of the casing (10), between the elastic member (32) and the bottom wall (24) of the casing (10), wherein the backing member (26) has a hardness which imitates a hardness of human muscle layer.

5. The injection practice device as claimed in claim 1, wherein the elastic member (32) comprises:
an elastic layer (38) with an elasticity and a thickness which imitate an elasticity and a thickness, respectively, of human subcutaneous layer; and
a skin film layer (36) which is bonded to the elastic layer (38) and which has an elasticity and a thickness which imitate an elasticity and a thickness, respectively, of human outer skin, and
wherein the skin film layer (36) is exposed outside through the opening window (16) of the top wall (14) of the casing (10).

6. An injection practice device, characterized in that there are provided:
a base member (24) having a hardness which does not allow an injection needle (4) to pierce through the base member (24), and
an elastic member (32) having a hardness which imitates a hardness of a part to which an injection is given, wherein the elastic member (32) is positioned on the base member (24) so that the elastic member (32) can be pinched upward.
